# EUROPÄISCHE PATENTSCHRIFT

(11) **EP 3 665 033 B1**
(45) Veröffentlichungstag und Bekanntmachung des Hinweises auf die Patenterteilung: **06.09.2023**
(21) Anmeldenummer: 18752112.5
(22) Anmeldetag: 31.07.2018
(51) Int. Cl.: B60L 15/20, B60L 3/10

(54) **VERFAHREN ZUM BETREIBEN EINER ELEKTRISCHEN MASCHINE, VORRICHTUNG, ANTRIEBSEINRICHTUNG, KRAFTFAHRZEUG**
METHOD FOR OPERATING AN ELECTRIC MACHINE, DEVICE, DRIVE DEVICE, AND MOTOR VEHICLE
PROCÉDÉ DE FONCTIONNEMENT D'UNE MACHINE ÉLECTRIQUE, DISPOSITIF, DISPOSITIF D'ENTRAÎNEMENT ET VÉHICULE À MOTEUR

(30) Priorität: 11.08.2017 DE 102017214074
(43) Veröffentlichungstag der Anmeldung: 17.06.2020
(73) Patentinhaber: Robert Bosch GmbH, 70442 Stuttgart (DE)
(72) Erfinder: GRABS, Manfred, 75446 Wiernsheim (DE)
(86) Internationale Anmeldenummer: PCT/EP2018/070741
(87) Internationale Veröffentlichungsnummer: WO 2019/030056

(56) Entgegenhaltungen:
- EP-A1- 3 031 662
- US-A1- 2003 177 846
- US-A1- 2011 178 662
- US-A1- 2014 336 885

## Beschreibung

Die Erfindung betrifft ein Verfahren zum Betreiben einer elektrischen Maschine eines Fahrzeugs, wobei bei einem Fahrvorgang in Abhängigkeit einer erfassten, zeitabhängigen Drehzahl der elektrischen Maschine ein Soll-Drehmoment der elektrischen Maschine geregelt wird.

Ferner betrifft die Erfindung eine Vorrichtung zum Betreiben der elektrischen Maschine, eine Antriebseinrichtung für ein Fahrzeug sowie ein Fahrzeug.

### Stand der Technik

Verfahren der eingangs genannten Art sind aus dem Stand der Technik bekannt. Das Dokument US 2011/178662 A1 offenbart ein Verfahren zur Minimierung der Antriebsstrangstörungen mittels einer elektrischen Maschine und einem Regler. So werden in Fahrzeugen elektrische Maschinen zum Erzeugen eines positiven und/oder negativen Antriebsdrehmoments eingesetzt, um das Fahrzeug anzutreiben oder einen Antrieb des Fahrzeugs zu unterstützen. Insbesondere dann, wenn die elektrische Maschine als einzige Antriebsmaschine vorgesehen ist, kommt dabei dem Drehzahlverhalten der elektrischen Maschine eine besondere Bedeutung zu. So können Schwankungen in der Drehzahl zu Schwankungen des Antriebsdrehmoments, beispielsweise zu einem "Ruckeln", also zu Beschleunigungen und Verzögerungen in Fahrtrichtung des Fahrzeugs, führen. Um Schwankungen in der Drehzahl zu reduzieren oder zu dämpfen ist es bekannt, die aktuelle Drehzahl zu erfassen und beispielsweise mittels eines Filters einfach oder mehrfach zu filtern, insbesondere einfach oder mehrfach nach der Zeit zu differenzieren, und bei der Vorgabe des Soll-Drehmoments zu berücksichtigen, um das Drehzahlverhalten zu verbessern (Drehzahlregelung). In Abhängigkeit von der Drehzahl wird dann ein Dämpfungsdrehmoment zur Regelung des Soll-Drehmoments dem Soll-Drehmoment zugeführt, wobei das Dämpfungsdrehmoment von dem Soll-Drehmoment subtrahiert oder zu dem Soll-Drehmoment hinzuaddiert wird. Durch diese Regelung werden insbesondere Schwankungen in der Drehzahl und/oder des Antriebsdrehmoments bei einem Fahrvorgang auf einem Schlechtweg reduziert oder gedämpft. "Schlechtweg" bedeutet hierbei eine Fahrbahn, welche zumindest eine, insbesondere eine Vielzahl von Unebenheiten und/oder Reibwertänderungen aufweist. Auch ist es bekannt, eine Raddrehzahl zumindest eines angetriebenen Rades des Fahrzeugs zur Drehmomentbeeinflussung beziehungsweise Drehzahlregelung zu erfassen. Dabei wird insbesondere die erfasste Drehzahl von der erfassten Raddrehzahl subtrahiert, um das Dämpfungsdrehmoment zu bestimmen. Durch diese Regelung werden insbesondere Schwingungen eines Antriebsstranges des Fahrzeugs, insbesondere bei Bremsvorgängen, reduziert oder minimiert.

### Offenbarung der Erfindung

Erfindungsgemäß ist vorgesehen, dass die erfasste Drehzahl durch einen ersten Hochpassfilter nach der Zeit differenziert wird, anschließend auf positive Drehzahl-Werte begrenzt und durch einen zweiten Hochpassfilter noch einmal nach der Zeit differenziert wird, wobei das Soll-Drehmoment in Abhängigkeit von dem Ausgangswert des zweiten Hochpassfilters geregelt wird. Der Vorteil hierbei ist, dass ein Erzeugen eines plötzlich auftretenden Drehmoments, insbesondere eines beschleunigenden Drehmoments, bei einem Bremsvorgang oder einer Vollbremsung, beispielsweise in Folge einer elektrischen Entladung eines Speicherelements oder Kondensators, beispielsweise eines der Hochpassfilter oder Filter, effektiv verhindert wird. Dadurch wird die Fahrsicherheit erhöht, weil unerwünschte, insbesondere beschleunigende Drehmomente bei einer Vollbremsung minimiert werden. Durch die erste zeitliche Ableitung der Drehzahl wird insbesondere eine zeitliche Drehzahländerung, insbesondere ein Gradient der Drehzahl, ermittelt. Beispielsweise wird der Gradient durch zumindest zwei innerhalb eines vorgebbaren Zeitraumes aufeinander folgender Drehzahlen gebildet. Die daraufhin folgende Begrenzung auf positive Werte bedeutet, dass negative Gradienten der Drehzahlen oder Gradienten mit negativer Steigung herausgefiltert werden. Die Gradienten werden somit auf lediglich positive Gradienten beschränkt. Anschließend werden die positiven Gradienten nach der Zeit differenziert. Dadurch wird ein konstantes, auf positive Werte beschränktes Ausgangssignal des zweiten Hochpassfilters erzeugt, welches zur Regelung des dem Soll-Drehmoments genutzt wird.

Erfindungsgemäß ist vorgesehen, dass die erfasste Drehzahl außerdem durch einen dritten Hochpassfilter nach der Zeit differenziert wird, und dass die durch den dritten Hochpassfilter nach der Zeit differenzierte Drehzahl durch einen ersten Tiefpassfilter nach der Zeit integriert wird, wobei in Abhängigkeit der Ausgangswerte des zweiten Hochpassfilters und des ersten Tiefpassfilters das Soll-Drehmoment geregelt wird. Der Vorteil hierbei ist, dass zusätzlich zu der Verhinderung der Erzeugung des unerwünschten beschleunigenden Drehmoments eine verbesserte Dämpfung der Drehzahl und/oder des Soll-Drehmoments insbesondere bei dem Bremsvorgang oder der Vollbremsung des Fahrzeugs gewährleistet wird. Dies führt insbesondere zu einer Verbesserung des Fahrkomforts, weil ruckartige Bewegungen insbesondere bei dem Bremsvorgang, reduziert oder gedämpft werden. Zur Regelung oder Dämpfung der Drehzahl und/oder des Soll-Drehmoments wird dabei mittels des dritten Hochpassfilters zumindest ein Gradient der Drehzahl oder eines Drehzahlverlaufs ermittelt beziehungsweise die Drehzahl gefiltert. Der Gradient beziehungsweise die gefilterte Drehzahl werden dem ersten Tiefpassfilter zugeführt. Durch den ersten Tiefpassfilter wird dann der ermittelte Gradient derart nach der Zeit integriert, dass die erfasste Drehzahl oder alternativ eine von der erfassten Drehzahl abweichende Drehzahl bestimmt wird. Die abweichende Drehzahl ist dabei insbesondere eine Drehzahl oder ein Drehzahlverlauf, bei welcher/welchem die Drehzahlschwankung herausgefiltert ist. Erfindungsgemäß wird der erste Tiefpassfilter zur Integrierung der Drehzahl oder des Drehzahlverlaufes in eine abweichende Drehzahl oder einen abweichenden Drehzahlverlauf mit einer geringeren Zeitkonstante betrieben als der dritte Hochpassfilter.

Bevorzugt ist vorgesehen, dass die Ausgangswerte des dritten Hochpassfilters und des ersten Tiefpassfilters miteinander verglichen und das Ergebnis des Vergleichs als Regelgröße dem ersten Tiefpassfilter zugeführt werden. Der Vorteil hierbei ist, dass eine dynamische und schnelle Regelung des Soll-Drehmomentes gewährleistet wird. Ist der Ausgangswert des dritten Hochpassfilters, also die gefilterte Drehzahl, größer als der Ausgangswert des ersten Tiefpassfilters, also größer als die durch Integration nach der Zeit ermittelte Drehzahl, so folgt der Tiefpassfilter dem Ausgangswert oder einem Ausgangssignal des dritten Hochpassfilters sofort, also ohne Zeitverzögerung. Durch den ersten Tiefpassfilter wird somit der Ausgangswert oder das Ausgangssignal des dritten Hochpassfilters direkt wieder integriert. Die dabei durch die Integration ermittelte Drehzahl entspricht dann zumindest im Wesentlichen der durch den dritten Hochpassfilter gefilterten Drehzahl. Ist der Ausgangswert des dritten Hochpassfilters kleiner als der Ausgangswert des ersten Tiefpassfilters, so wird dem ersten Tiefpassfilter der Ausgangswert des dritten Hochpassfilters zugeführt, jedoch wird der erste Tiefpassfilter dann mit einer vorgebbaren Zeitkonstante betrieben, welche vorzugsweise kleiner ist als eine Zeitkonstante, mit der der dritte Hochpassfilter betrieben wird. Die dabei durch Integration nach der Zeit ermittelte Drehzahl weicht vorzugsweise von der gefilterten Drehzahl des dritten Hochpassfilters ab, so dass ein effektives Regeln oder Dämpfen des Soll-Drehmoments erfolgen kann.

Vorzugsweise ist vorgesehen, dass die durch den ersten Tiefpassfilter nach der Zeit integrierte Drehzahl durch einen zweiten Tiefpassfilter nach der Zeit integriert wird, wobei der zweite Tiefpassfilter invers zu dem ersten Tiefpassfilter ausgebildet ist, und wobei der Ausgangswert des einen der Tiefpassfilter von dem Ausgangswert des anderen der Tiefpassfilter subtrahiert wird, und wobei in Abhängigkeit der Ausgangswerte des zweiten Hochpassfilters und des durch die Subtraktion erhaltenen Wertes das Soll-Drehmoment geregelt wird. Der Vorteil hierbei ist, dass die Dämpfung der Drehzahl und/oder des Soll-Drehmoments insbesondere bei dem Bremsvorgang zusätzlich verbessert wird. "Invers" bedeutet hierbei, dass der zweite Tiefpassfilter dem Ausgangswert oder dem Ausgangssignal des ersten Tiefpassfilters dann sofort folgt, wenn der Ausgangswert des ersten Tiefpassfilters kleiner ist als der Ausgangswert des zweiten Tiefpassfilters. Ist der Ausgangswert des ersten Tiefpassfilters größer als der Ausgangswert des zweiten Tiefpassfilters, so wird dem zweiten Tiefpassfilter der Ausgangswert des ersten Hochpassfilters zugeführt, jedoch wird der zweite Tiefpassfilter dann mit einer vorgebbaren Zeitkonstante, die vorzugsweise kleiner ist als die Zeitkonstante des ersten Tiefpassfilters, betrieben. Dies gewährleistet, dass der Ausgangswert oder das Ausgangssignal des zweiten Tiefpassfilters und der Ausgangswert oder das Ausgangssignal des ersten Tiefpassfilters miteinander verrechnet, insbesondere miteinander addiert oder voneinander subtrahiert werden können. Dadurch erfolgt eine Präzisierung des resultierenden Dämpfungsdrehmoments, so dass das Soll-Drehmoment noch genauer geregelt werden kann.

Bevorzugt ist vorgesehen, dass aus dem Ausgangswert oder mehreren Ausgangswerten des zweiten Tiefpassfilters ein Mittelwert berechnet wird, wobei das Soll-Drehmoment in Abhängigkeit von dem Mittelwert geregelt wird. Der Vorteil hierbei ist, dass die Regelung der Drehzahl und/oder des Soll-Drehmoments insbesondere bei dem Bremsvorgang oder der Vollbremsung nochmals verbessert wird. Insbesondere ist durch den berechneten Mittelwert eine besonders schnelle Bestimmung möglich, ob durch den Mittelwert ein kritisches oder ein unkritisches Dämpfungsdrehmoment realisiert ist. "Kritisch" bedeutet hierbei, dass in Folge des durch den berechneten Mittelwert geregelten Soll-Drehmoments ein Benutzer des Fahrzeugs störende Schwingungen, beispielsweise in einem Fahrwerk oder in einem Lenkrad des Fahrzeugs, während des Bremsvorganges spürt. Vorzugsweise wird der berechnete Mittelwert mit einem vorgebbaren Mittelwert verglichen. Ist die Abweichung zwischen dem berechneten und dem vorgebbaren Mittelwert größer als ein vorgebbarer Grenzwert, wird auf das kritische Dämpfungsdrehmoment erkannt. Der vorgebbare Mittelwert entspricht vorzugsweise einem Dämpfungsdrehmoment oder einer Dämpfung, durch welche während des Bremsvorganges keine störenden Schwingungen erzeugt und damit ein insbesondere gleichmäßiger Bremsvorgang realisiert werden. Der vorgebbare Mittelwert ist beispielsweise gleich Null.

Vorzugweise wird zur Regelung des Soll-Drehmoments der berechnete Mittelwert verstärkt. Der Vorteil hierbei ist, dass der berechnete Mittelwert an den vorgegebenen Mittelwert angepasst werden kann. Insbesondere ist es dadurch möglich, den berechneten Mittelwert derart anzuheben oder abzusenken, dass die Abweichung kleiner oder gleich dem vorgebbaren Grenzwert wird. Damit wird effektiv ein unkritisches Dämpfungsdrehmoment realisiert und das Bremsverhalten des Fahrzeugs bei einem Bremsvorgang optimiert. Die Hinzufügung des Verstärkungswerts erfolgt beispielsweise mittels einer Multiplikation eines vorgebbaren Faktors, insbesondere eines Faktors in einem Bereich von 0,5 bis 0,75. Zur Verstärkung des berechneten Mittelwerts wird diesem vorzugsweise ein vorgebbarer Verstärkungswert oder der vorgebbare Faktor, insbesondere mittels eines Verstärkers oder einer Verstärkereinrichtung, hinzugefügt. Der Verstärker ist vorzugsweise dazu ausgebildet, mittels des Verstärkungswerts den aus den Ausgangssignalen des zweiten Tiefpassfilters berechneten Mittelwert insbesondere dem vorgegebenen Mittelwert anzupassen.

Die Vorrichtung zum Betreiben einer elektrischen Maschine eines Fahrzeugs gemäß den Merkmalen des Anspruchs 6 zeichnet sich durch einen ersten Hochpassfilter zur Differenzierung der erfassten Drehzahl nach der Zeit, durch eine Begrenzereinrichtung zum Begrenzen der nach der Zeit differenzierten Drehzahl des ersten Hochpassfilters auf positive Drehzahlwerte, und durch einen zweiten Hochpassfilter zur Differenzierung der auf positive Drehzahlwerte begrenzten Drehzahl nach der Zeit aus, wobei die Regeleinrichtung das Soll-Drehmoment in Abhängigkeit von dem Ausgangswert des zweiten Hochpassfilters regelt. Der erste und der zweite Hochpassfilter sind vorzugsweise als Differentialglieder oder Differenzierglieder mit Verzögerung erster Ordnung, zweiter Ordnung oder höherer Ordnung ausgebildet. Es ergeben sich hierdurch die bereits genannten Vorteile. Weitere Vorteile und bevorzugte Merkmale ergeben sich insbesondere aus dem zuvor Beschriebenen sowie aus den Ansprüchen.

Erfindungsgemäß ist vorgesehen, dass die Vorrichtung einen dritten Hochpassfilter zur Differenzierung der erfassten Drehzahl nach der Zeit und einen ersten Tiefpassfilter zur Integrierung des Ausgangswertes des dritten Hochpassfilters nach der Zeit aufweist, wobei die Regeleinrichtung des Soll-Drehmoments in Abhängigkeit von den Ausgangswerten des zweiten Hochpassfilters und des ersten Hochpassfilters regelt. Es ergeben sich hierbei die bereits genannten Vorteile. Weitere Vorteile und bevorzugte Merkmale ergeben sich insbesondere aus dem zuvor Beschriebenen sowie aus den Ansprüchen.

Die Antriebsrichtung für ein Fahrzeug, mit einer elektrischen Maschine und einer Vorrichtung zum Betreiben einer elektrischen Maschine, zeichnet sich dadurch aus, dass die Vorrichtung dazu ausgebildet ist, bei bestimmungsgemäßem Gebrauch das Verfahren nach einem der vorherigen Ansprüche durchzuführen. Es ergeben sich hierdurch die bereits genannten Vorteile. Weitere Vorteile und bevorzugte Merkmale ergeben sich insbesondere aus dem zuvor Beschriebenen sowie aus den Ansprüchen.

Das Kraftfahrzeug gemäß den Merkmalen des Anspruchs 9 zeichnet sich durch eine Antriebseinrichtung nach Anspruch 8 aus. Es ergeben sich hierdurch die bereits genannten Vorteile. Weitere Vorteile und bevorzugte Merkmale ergeben sich insbesondere aus dem zuvor Beschriebenen sowie aus den Ansprüchen.

Im Folgenden soll die Erfindung anhand der Zeichnungen näher erläutert werden. Dazu zeigen:
- Figur 1: eine Vorrichtung zum Betreiben einer elektrischen Maschine für ein Fahrzeug gemäß einem ersten Ausführungsbeispiel,
- Figur 2: die Vorrichtung gemäß einem zweiten Ausführungsbeispiel, und
- Figur 3: die Vorrichtung gemäß einem dritten Ausführungsbeispiel.

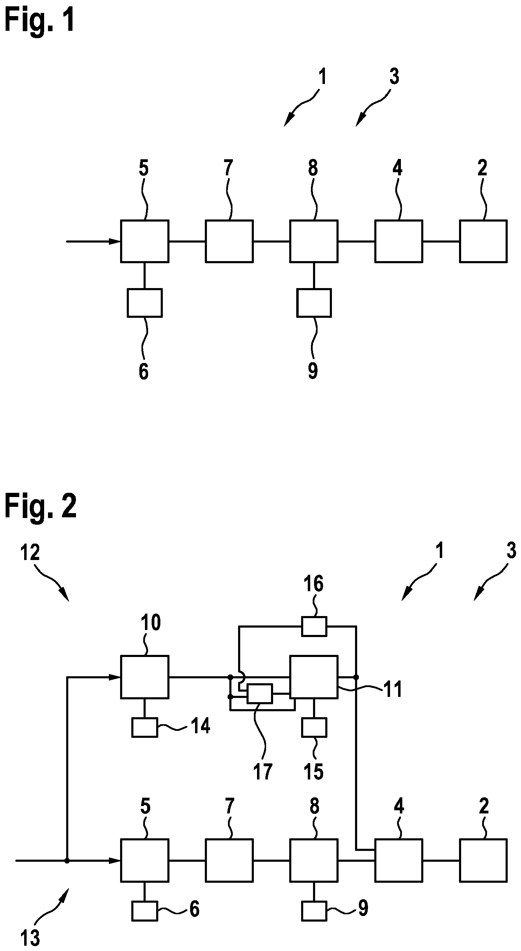

Figur 1 zeigt in einer vereinfachten Darstellung eine Vorrichtung 1 zum Betreiben einer elektrischen Maschine 2, beispielsweise einer Gleichstrom- oder Wechselstrommaschine, eines hier nicht dargestellten Fahrzeugs 3. Die Vorrichtung 1 weist eine Regeleinrichtung 4 zum Regeln eines Soll-Drehmoments der elektrischen Maschine 2 bei einem Fahrvorgang in Abhängigkeit einer erfassten, zeitabhängigen Drehzahl der elektrischen Maschine 2, insbesondere der Drehzahl einer Antriebswelle der elektrischen Maschine 2, auf. Optional werden mehrere Drehzahlen oder ein zeitlicher Drehzahlverlauf erfasst.

Die Drehzahl oder die Drehzahl der Antriebswelle wird vorzugsweise mittels eines Sensors, insbesondere Drehzahlsensors, erfasst.

Die Vorrichtung 1 weist weiterhin einen ersten Hochpassfilter 5 zur Differenzierung der erfassten Drehzahl nach der Zeit auf. Dem Hochpassfilter 5 werden als Eingangssignal die erfasste Drehzahl oder ein Drehzahlverlauf bestehend aus zumindest zwei Drehzahlen sowie durch eine mit dem Hochpassfilter 5 verbundene Schalteinrichtung 6 eine Zeitkonstante T₁, zugeführt. Der erste Hochpassfilter 5 ist vorliegend als Differenzierglied mit Verzögerung erster Ordnung, insbesondere als DT1-Glied, ausgebildet.

Durch den ersten Hochpassfilter 5 wird eine erste zeitliche Ableitung der Drehzahl zur Ermittlung einer zeitlichen Drehzahländerung, insbesondere eines Gradienten der Drehzahl, durchgeführt. Beispielsweise wird der Gradient durch zumindest zwei innerhalb eines vorgebbaren Zeitraumes aufeinander folgender Drehzahlen gebildet. Optional oder zusätzlich wird die zeitliche Ableitung mehrerer Drehzahlen oder eines zeitlichen Drehzahlverlaufs durchgeführt.

Die Vorrichtung 1 weist weiterhin eine Begrenzereinrichtung 7 zum Begrenzen der durch den ersten Hochpassfilter 5 nach der Zeit differenzierten Drehzahl auf positive Drehzahl-Werte auf. Der Begrenzereinrichtung 7 werden als Eingangssignal die durch den ersten Hochpassfilter 5 nach der Zeit differenzierte Drehzahl zugeführt. Durch die Begrenzereinrichtung 7 wird die nach der Zeit differenzierte Drehzahl auf Gradienten mit positiver Steigung beschränkt. Dies bedeutet, dass negative Gradienten oder Gradienten mit negativer Steigung durch die Begrenzereinrichtung 7 herausgefiltert werden.

Zusätzlich weist die Vorrichtung 1 einen vorzugsweise analog zum ersten Hochpassfilter 5 ausgebildeten zweiten Hochpassfilter 8 zur Differenzierung der auf positive Drehzahl-Werte begrenzten Drehzahl nach der Zeit auf. Dem zweiten Hochpassfilter 8 werden als Eingangssignale das Ausgangssignal der Begrenzereinrichtung 7 sowie durch eine weitere Schalteinrichtung 9 eine Zeitkonstante T₂ zugeführt. Vorzugsweise ist T₁ gleich T₂. Durch den zweiten Hochpassfilter 8 werden die positiven Gradienten nach der Zeit differenziert. Dadurch wird ein insbesondere konstantes, positives Ausgangssignal des zweiten Hochpassfilters 8 erzeugt. In Abhängigkeit von dem Ausgangssignal des zweiten Hochpassfilters 8 wird vorzugsweise ein Dämpfungsdrehmoment zur Regelung des Soll-Drehmoments der Regeleinrichtung 4 zugeführt, wobei die Regeleinrichtung 4 das Soll-Drehmoment in Abhängigkeit von dem Ausgangswert des zweiten Hochpassfilters 8, insbesondere des Dämpfungsdrehmoments, regelt. Vorzugsweise wird dabei der Ausgangswert des zweiten Hochpassfilters 8 beziehungsweise das Dämpfungsdrehmoment auf das Soll-Drehmoment aufaddiert.

Hierbei ergibt sich der Vorteil, dass insbesondere bei einem Bremsvorgang, insbesondere während des Bremsvorganges, des Fahrzeugs 3 ein beschleunigendes Drehmoment minimiert oder dessen Erzeugung zumindest im Wesentlichen verhindert wird.

Figur 2 zeigt die Vorrichtung 1 gemäß einem zweiten Ausführungsbeispiel. Die Vorrichtung gemäß Figur 2 weist zusätzlich zu den aus Figur 1 bekannten Merkmalen zusätzlich einen dritten Hochpassfilter 10 zur Differenzierung der erfassten Drehzahl nach der Zeit und einen ersten Tiefpassfilter 11 zur Integrierung des Ausgangswertes des dritten Hochpassfilters 10 nach der Zeit auf.

Dabei regelt die Regeleinrichtung 4 das Soll-Drehmoment in Abhängigkeit von den Ausgangswerten des zweiten Hochpassfilters 8 und des ersten Tiefpassfilters 11. Ein Dämpfungsdrehmoment zur Regelung des Soll-Drehmoments resultiert somit hierbei aus dem Ausgangswert des zweiten Hochpassfilters 8 und des ersten Tiefpassfilters 11. Der dritte Hochpassfilter 10 und der erste Tiefpassfilter 11 bilden dabei einen Parallelzweig 12 zu dem Regelzweig 13, welcher den ersten Hochpassfilter 5 und den zweiten Hochpassfilter 8 aufweist.

Der dritte Hochpassfilter 10 ist analog zu dem ersten Hochpassfilter 5 ausgebildet und mit einer Schalteinrichtung 14 verbunden, welche dem dritten Hochpassfilter 10 eine Zeitkonstante T₃ übermittelt. Der erste Tiefpassfilter 11 ist mit einer Schalteinrichtung 15 verbunden, welche diesem eine Zeitkonstante T₄ übermittelt. Vorzugsweise ist der erste Tiefpassfilter 11 als Integrationsglied, insbesondere als PT1-Glied ausgebildet.

Zudem weist der erste Tiefpassfilter 11 optional eine Speichereinheit 16 auf, welche vorzugsweise dazu ausgebildet ist, zumindest einen Ausgangswert des ersten Tiefpassfilters 11 zu empfangen und bei Bedarf abzuspeichern.

Vorzugsweise ist vorgesehen, dass der Ausgangswert des ersten Tiefpassfilters 11 an eine Vergleichseinheit 17 des ersten Tiefpassfilters 11 übermittelt wird. Zusätzlich wird das Ausgangssignal des dritten Hochpassfilters 10 an die Vergleichseinheit 17 übermittelt. Durch die Vergleichseinheit 17, insbesondere durch eine Logik der Vergleichseinheit 17, werden der Ausgangswert des ersten Tiefpassfilters 11, also die gefilterte Drehzahl, und der Ausgangswert des dritten Hochpassfilters 10, also die durch Integration nach der Zeit ermittelte Drehzahl, miteinander verglichen. Wenn der Ausgangswert des ersten Tiefpassfilters 11 kleiner ist als der Ausgangswert des dritten Hochpassfilters 10, wird durch den Tiefpassfilter 11 der Ausgangswert des dritten Hochpassfilters 10 direkt nach der Zeit integriert. Damit folgt der erste Tiefpassfilter 11 ohne zeitlichen Verzug dem Ausgangssignal des dritten Hochpassfilters 10. Ist der Ausgangswert des dritten Hochpassfilters 10 kleiner als der Ausgangswert des ersten Tiefpassfilters 11, so wird dem ersten Tiefpassfilter 11 der Ausgangswert des dritten Hochpassfilters 10 zugeführt, jedoch wird der erste Tiefpassfilter 11 dann mit der Zeitkonstante T₄ betrieben, wobei T₄ kleiner ist als T₃. Die dann durch Integration ermittelte Drehzahl des ersten Tiefpassfilters 11 weicht von der gefilterten Drehzahl des dritten Hochpassfilters 10 ab, so dass ein effektives Regeln oder Dämpfen des Soll-Drehmoments erfolgen kann. Die abweichende Drehzahl ist dabei insbesondere eine Drehzahl, bei welcher die Drehzahlschwankung herausgefiltert ist.

Dadurch wird zusätzlich zu der Verhinderung der Erzeugung eines beschleunigenden Drehmoments eine verbesserte Dämpfung der Drehzahl und/oder des Soll-Drehmoments insbesondere bei dem Bremsvorgang oder der Vollbremsung des Fahrzeugs gewährleistet.

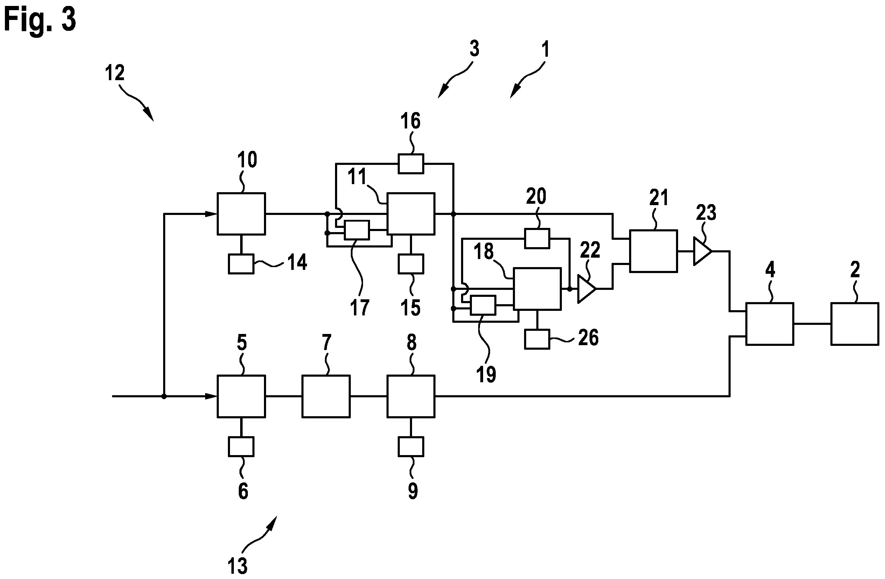

Figur 3 zeigt eine weitere Ausgestaltung der Vorrichtung 1, wobei die Vorrichtung nunmehr zusätzlich einen zweiten Tiefpassfilter 18 zur Integrierung des Ausgangswertes des ersten Tiefpassfilters 11 nach der Zeit aufweist. Der zweite Tiefpassfilter 18 ist vorzugsweise analog zum ersten Tiefpassfilter 11 als PT1-Glied ausgebildet. Der zweite Tiefpassfilter 18 weist bevorzugt eine Vergleichseinheit 19 auf, wobei das Ausgangssignal des ersten Tiefpassfilters 11 und/oder das Ausgangssignal des zweiten Tiefpassfilters 18 an die Vergleichseinheit übermittelbar sind. Zudem weist der zweite Tiefpassfilter 18 optional eine Speichereinheit 20 auf. Der zweite Tiefpassfilter 18 ist invers zu dem ersten Tiefpassfilter 11 ausgebildet. Dabei bedeutet "invers", dass die Logik der Vergleichseinheit 19 des zweiten Tiefpassfilters 18 umgekehrt ist zu der Logik der Vergleichseinheit 17 des ersten Tiefpassfilters 11. Der zweite Tiefpassfilter 18 ist mit einer Schalteinrichtung 26 verbunden, welche diesem eine Zeitkonstante T₅ übermittelt. Vorzugsweise ist T₅ kleiner als Ta.Zusätzlich ist bevorzugt vorgesehen, dass T₅ größer ist als T₁.

Weiterhin weist die Vorrichtung 1 eine Schnittstelle 21 auf, insbesondere zur Subtraktion des Ausgangswerts des einen der Tiefpassfilter 11, 18 von dem Ausgangswert des anderen der Tiefpassfilter 11, 18. Dazu werden an die Schnittstelle 21 vorzugsweise die Ausgangssignale des ersten Tiefpassfilters 11 und des zweiten Tiefpassfilters 18 übermittelt. Vorliegend wird der Ausgangswert des zweiten Tiefpassfilters 18 von dem Ausgangswert des ersten Tiefpassfilters 11 subtrahiert. Die Regeleinrichtung 4 regelt in Abhängigkeit der Ausgangswerte des zweiten Hochpassfilters 8 und des Ausgangswerts der Schnittstelle 21 das Soll-Drehmoment.

Vorzugsweise weist der zweite Tiefpassfilter 18 zusätzlich eine insbesondere ansteuerbare Verstärkereinrichtung 22 auf. Durch diese wird aus dem Ausgangswert des zweiten Tiefpassfilters 18 ein Mittelwert berechnet, wobei das Soll-Drehmoment in Abhängigkeit von dem Mittelwert geregelt wird. Dabei wird zur Regelung des Soll-Drehmoments, insbesondere zur Regelung des Ausgangswerts der Schnittstelle 21, der berechnete Mittelwert verstärkt, insbesondere durch Hinzufügung eines vorgebbaren Verstärkungswerts zu dem berechneten Mittelwert. Die Verstärkung oder Hinzufügung des Verstärkungswerts erfolgt insbesondere durch die Verstärkereinrichtung 22. Durch die Verstärkung oder Hinzufügung des Verstärkungswertes ist der berechnete Mittelwert an einen vorgegebenen Mittelwert anpassbar, wobei der vorgegebene Mittelwert vorzugsweise einem Ausgangswert oder Dämpfungsdrehmoment entspricht, durch welches während eines Bremsvorganges keine den Fahrer störenden und/oder für den Fahrer spürbaren Schwingungen erzeugt werden. Der berechnete Mittelwert ist insbesondere dann an den vorgegebenen Mittelwert angepasst, wenn eine Abweichung zwischen dem berechneten und dem vorgegebenen Mittelwert kleiner oder gleich einem vorgebbaren Grenzwert ist. Der vorgebbare Mittelwert ist beispielsweise gleich Null. Die Verstärkung oder Hinzufügung des Verstärkungswertes erfolgt beispielsweise mittels einer Multiplikation eines Faktors oder Verstärkungsfaktors kleiner 1, insbesondere eines Faktors in einem Bereich von 0,5 bis 0,75. Durch die Verstärkung oder Hinzufügung des Verstärkungswertes ist es insbesondere möglich, das resultierende Dämpfungsdrehmoment mittelwertfrei einzustellen. Wird der Faktor größer als 0,75 gewählt, so wirkt er insbesondere wie eine motorisch aktive Bremsung durch die elektrischen Maschine 2. Durch eine Wahl des Faktors größer als 0,75 kann somit die Verstärkereinrichtung 22 für eine aktive Bremsunterstützung genutzt werden. Alternativ zu der Verstärkereinrichtung 22 ist es vorgesehen, dass zum Optimieren eines elektrischen Bremsens oder Bremsvorganges ein Bremsdruck eingesetzt wird, wobei der Bremsdruck vorzugsweise durch eine Kennlinienfaktorbildung ermittelt wird.

Zudem weist die Vorrichtung 1 vorzugsweise eine weitere, insbesondere ansteuerbare, Verstärkereinrichtung 23 auf. Die weitere Verstärkereinrichtung 23 ist vorzugsweise dazu ausgebildet, den Parallelzweig 12 zu aktivieren oder zu deaktivieren. Eine Aktivierung erfolgt beispielsweise durch ein Betreiben der Verstärkereinrichtung 23 mit einem Faktor oder Verstärkungsfaktor größer oder gleich 1. Optional ist zumindest noch eine weitere, hier nicht dargestellte Verstärkereinrichtung 25 vorgesehen, welche vorzugsweise dazu ausgebildet ist, den Regelzweig 13 und/oder die Regeleinrichtung 4 zu aktivieren oder zu deaktivieren. Vorzugsweise werden der Parallelzweig 12 und der Regelzweig 13 dann aktiviert, wenn auf die Durchführung eines Bremsvorganges erkannt wird. Zur Erkennung des Bremsvorganges wird das Fahrzeug 3 beispielsweise darauf überwacht, ob ein Bremspedal des Fahrzeugs 3 durch einen Benutzer des Fahrzeugs 3 betätigt wird. Vorliegend wird der Parallelzweig 12 durch den dritten Hochpassfilter 10, den ersten Tiefpassfilter 11 und den zweiten Tiefpassfilter 18 gebildet.

Durch die Vorrichtung 1 und das aus dem zuvor Beschriebenen hervorgehende Verfahren zum Betreiben der elektrischen Maschine 2 für das Fahrzeug 3 ergibt sich der Vorteil, dass eine besonders vorteilhafte Dämpfung des Soll-Drehmoments sowohl bei Fahrvorgängen auf "Schlechtwegen" als auch bei Bremsvorgängen, insbesondere bei Vollbremsungen, gewährleistet wird. Dies verbessert einen Fahrkomfort für einen Benutzer des Fahrzeugs, weil ruckartige Bewegungen des Fahrzeugs 3 aufgrund von Drehzahl- oder Drehmomentschwankungen minimiert werden. Zudem wird die Fahrsicherheit erhöht, weil insbesondere bei einer Vollbremsung ein beschleunigendes Drehmoment, beispielsweise in Folge eines Entladens eines Kondensators eines der Hochpassfilter 5,8,10, minimiert wird. Im Vergleich zu bekannten Dämpfungsregelungen ergibt sich zudem der Vorteil, dass ein verbessertes Beschleunigungsverhalten und Bremsverhalten des Fahrzeugs 3 sowie eine gleichmäßigere Drehzahl an einer Schlupfgrenze gewährleistet werden.

Weiterhin ist eine hier nicht dargestellte Antriebseinrichtung 24 für das Fahrzeug 3 vorgesehen, mit der elektrischen Maschine 2 und der Vorrichtung 1 zum Betreiben der elektrischen Maschine 2, wobei die Vorrichtung 1 dazu ausgebildet ist, bei bestimmungsgemäßen Gebrauch das Verfahren zum Betreiben der elektrischen Maschine 2 durchzuführen. Ebenso ist ein Kraftfahrzeug vorgesehen, welches die Antriebseinrichtung 24 aufweist.

## Patentansprüche

1. Verfahren zum Betreiben einer elektrischen Maschine (2) für ein Fahrzeug (3), wobei bei einem Fahrvorgang in Abhängigkeit einer erfassten, zeitabhängigen Drehzahl der elektrischen Maschine (2) ein Soll-Drehmoment der elektrischen Maschine (2) geregelt wird,
wobei
die erfasste Drehzahl durch einen ersten Hochpassfilter (5) nach der Zeit differenziert wird,
anschließend wird die nach der Zeit
differenzierte Drehzahl auf Gradienten mit positiver Steigung beschränkt,und diese Gradienten werden durch einen zweiten Hochpassfilter (8) noch einmal nach der Zeit differenziert,
**dadurch gekennzeichnet, dass** die erfasste Drehzahl außerdem durch einen dritten Hochpassfilter (10) nach der Zeit differenziert wird und dass die durch den dritten Hochpassfilter (10) nach der Zeit differenzierte Drehzahl durch einen ersten Tiefpassfilter (11) nach der Zeit integriert wird,
wobei der erste Tiefpassfilter (11) mit einer geringeren Zeitkonstante betrieben wird als der dritte Hochpassfilter (10),
wobei in Abhängigkeit der Ausgangswerte des zweiten Hochpassfilters (8) und des ersten Tiefpassfilters (11) ein Dämpfungsdrehmoment resultiert, welches auf das Soll-Drehmoment aufaddiert wird .

2. Verfahren nach Anspruch 1, **dadurch gekennzeichnet, dass** die Ausgangswerte des dritten Hochpassfilters (10) und des ersten Tiefpassfilters (11) miteinander verglichen und als Regelgröße dem ersten Tiefpassfilter (11) zugeführt werden.

3. Verfahren nach einem der Ansprüche 1 oder 2, **dadurch gekennzeichnet, dass** die durch den ersten Tiefpassfilter (11) nach der Zeit integrierte Drehzahl durch einen zweiten Tiefpassfilter (18) nach der Zeit integriert wird, wobei der zweite Tiefpassfilter (18) invers zu dem ersten Tiefpassfilter (11) ausgebildet ist, und wobei der Ausgangswert des einen der Tiefpassfilter (11,18) von dem Ausgangswert des anderen der Tiefpassfilter (11,18) subtrahiert wird, und wobei in Abhängigkeit der Ausgangswerte des zweiten Hochpassfilters (8) und des durch die Subtraktion erhaltenen Wertes das Soll-Drehmoment geregelt wird.

4. Verfahren nach Anspruch 3, **dadurch gekennzeichnet, dass** aus dem Ausgangswert des zweiten Tiefpassfilters (18) ein Mittelwert berechnet wird, wobei das Soll-Drehmoment in Abhängigkeit von dem Mittelwert geregelt wird.

5. Verfahren nach Anspruch 4, **dadurch gekennzeichnet, dass** zur Regelung des Soll-Drehmoments der berechnete Mittelwert verstärkt wird.

6. Vorrichtung (1) zum Betreiben einer elektrischen Maschine (2) eines Fahrzeug (3), mit einer Regeleinrichtung (4) zum Regeln eines Soll-Drehmoments der elektrischen Maschine (2) bei einem Fahrvorgang in Abhängigkeit einer erfassten, zeitabhängigen Drehzahl der elektrischen Maschine (2),
wobei
die Vorrichtung einen ersten Hochpassfilter (5) zur Differenzierung der erfassten Drehzahl nach der Zeit, eine Begrenzereinrichtung (7) zum Begrenzen der nach der Zeit differenzierten Drehzahl des ersten Hochpassfilters (5) auf Gradienten mit positiver Steigung und einen zweiten Hochpassfilter (8) zur Differenzierung der Gradienten mit positiver Steigung nach der Zeit umfasst, **gekennzeichnet durch** einen dritten Hochpassfilter (10) zur Differenzierung der erfassten Drehzahl nach der Zeit und einen ersten Tiefpassfilter (11) zur Integrierung des Ausgangswertes des dritten Hochpassfilters (10) nach der Zeit,
wobei der erste Tiefpassfilter (11) mit einer geringeren Zeitkonstante betrieben wird als der dritte Hochpassfilter (10),
wobei die Regeleinrichtung (4) das Soll-Drehmoment in Abhängigkeit von den Ausgangswerten des zweiten Hochpassfilters (8) und des ersten Tiefpassfilters (11) regelt, indem die Regeleinrichtung (4) ein aus den Ausgangswerten des zweiten Hochpassfilters (8) und des ersten Tiefpassfilters (11) resultierendes Dämpfungsdrehmoment auf das Soll-Drehmoment aufaddiert.

7. Vorrichtung nach Anspruch 6, **gekennzeichnet durch** einen zweiten Tiefpassfilter (18) zur Integrierung des Ausgangswertes des ersten Tiefpassfilters (11) nach der Zeit, wobei der zweite Tiefpassfilter (18) invers zu dem ersten Tiefpassfilter (11) ausgebildet ist, und durch eine Recheneinrichtung (19) zur Subtraktion des Ausgangswertes des einen der Tiefpassfilter (11,18) von dem Ausgangswert des anderen Tiefpassfilters (11,18), wobei die Regeleinrichtung in Abhängigkeit der Ausgangswerte des zweiten Hochpassfilters (8) und des Ausgangswertes der Recheneinrichtung (19) das Soll-Drehmoment regelt.

8. Antriebseinrichtung (24) für ein Fahrzeug (3), mit einer elektrischen Maschine (2) und einer Vorrichtung (1) zum Betreiben der elektrischen Maschine (2), **dadurch gekennzeichnet, dass** die Vorrichtung (1) dazu ausgebildet ist, bei bestimmungsgemäßen Gebrauch das Verfahren nach einem der Ansprüche 1 bis 5 durchzuführen.

9. Kraftfahrzeug, **gekennzeichnet durch** eine Antriebseinrichtung (24) nach Anspruch 8.

## Claims

1. Method for operating an electric machine (2) for a vehicle (3), wherein a target torque of the electric machine (2) is regulated during a driving event on the basis of a detected, time-dependent rotational speed of the electric machine (2),
wherein
the detected rotational speed is differentiated with respect to time by a first high-pass filter (5),
the rotational speed differentiated with respect to time is subsequently restricted to gradients with a positive slope, and
these gradients are once again differentiated with respect to time by a second high-pass filter (8),
**characterized in that** the detected rotational speed is moreover differentiated with respect to time by a third high-pass filter (10), and **in that** the rotational speed differentiated with respect to time by the third high-pass filter (10) is integrated with respect to time by a first low-pass filter (11),
wherein the first low-pass filter (11) is operated with a shorter time constant than the third high-pass filter (10),
wherein a damping torque results on the basis of the output values of the second high-pass filter (8) and of the first low-pass filter (11) and is added to the target torque.

2. Method according to Claim 1, **characterized in that** the output values of the third high-pass filter (10) and of the first low-pass filter (11) are compared to one another and fed to the first low-pass filter (11) as a controlled variable.

3. Method according to either of Claims 1 and 2, **characterized in that** the rotational speed integrated with respect to time by the first low-pass filter (11) is integrated with respect to time by a second low-pass filter (18), wherein the second low-pass filter (18) has an inverted embodiment with respect to the first low-pass filter (11), and wherein the output value of one of the low-pass filters (11, 18) is subtracted from the output value of the other low-pass filter (11, 18), and wherein the target torque is regulated on the basis of the output values of the second high-pass filter (8) and of the value obtained by the subtraction.

4. Method according to Claim 3, **characterized in that** a mean value is calculated from the output value of the second low-pass filter (18), wherein the target torque is regulated on the basis of the mean value.

5. Method according to Claim 4, **characterized in that** the calculated mean value is amplified for the purposes of regulating the target torque.

6. Apparatus (1) for operating an electric machine (2) of a vehicle (3), comprising a control device (4) for regulating a target torque of the electric machine (2) during a driving event on the basis of a detected, time-dependent rotational speed of the electric machine (2), wherein
the apparatus comprises a first high-pass filter (5) for differentiating the detected rotational speed with respect to time, a limiter device (7) for limiting the rotational speed of the first high-pass filter (5), which was differentiated with respect to time, to gradients with a positive slope, and a second high-pass filter (8) for differentiating the gradients with a positive slope with respect to time, **characterized by** a third high-pass filter (10) for differentiating the detected rotational speed with respect to time and a first low-pass filter (11) for integrating the output value of the third high-pass filter (10) with respect to time,
wherein the first low-pass filter (11) is operated with a shorter time constant than the third high-pass filter (10),
wherein the control device (4) regulates the target torque on the basis of the output values of the second high-pass filter (8) and of the first low-pass filter (11) by virtue of the control device (4) adding a damping torque, which results from the output values of the second high-pass filter (8) and of the first low-pass filter (11), to the target torque.

7. Apparatus according to Claim 6, **characterized by** a second low-pass filter (18) for integrating the output value of the first low-pass filter (11) with respect to time, wherein the second low-pass filter (18) has an inverted embodiment with respect to the first low-pass filter (11), and by a computing device (19) for subtracting the output value of one of the low-pass filters (11, 18) from the output value of the other low-pass filter (11, 18), wherein the control device regulates the target torque on the basis of the output values of the second high-pass filter (8) and of the output value of the computing device (19).

8. Drive device (24) for a vehicle (3), comprising an electric machine (2) and an apparatus (1) for operating the electric machine (2), **characterized in that** the apparatus (1) is embodied to carry out the method according to any one of Claims 1 to 5 when used as intended.

9. Motor vehicle, **characterized by** a drive device (24) according to Claim 8.

## Revendications

1. Procédé de fonctionnement d'une machine électrique (2) pour un véhicule (3), dans lequel, lors d'un processus de conduite, en fonction d'un régime moteur détecté et dépendant du temps de la machine électrique (2), un couple de consigne de la machine électrique (2) est régulé,
dans lequel
le régime moteur détecté est différencié, à l'aide d'un premier filtre passe-haut (5), en fonction du temps,
puis, le régime moteur différencié en fonction du temps est limité à des gradients à pente positive, et ces gradients sont à nouveau différenciés, à l'aide d'un deuxième filtre passe-haut (8), en fonction du temps,
**caractérisé en ce que** le régime moteur détecté est en outre différencié, à l'aide d'un troisième filtre passe-haut (10), en fonction du temps, et **en ce que** le régime moteur différencié à l'aide du troisième filtre passe-haut (10) en fonction du temps est intégré, à l'aide d'un premier filtre passe-bas (11), en fonction du temps,
dans lequel le premier filtre passe-bas (11) fonctionne avec une constante de temps inférieure à celle du troisième filtre passe-haut (10),
dans lequel, en fonction des valeurs de sortie du deuxième filtre passe-haut (8) et du premier filtre passe-bas (11), il en résulte un couple d'amortissement qui est additionné au couple de consigne.

2. Procédé selon la revendication 1, **caractérisé en ce que** les valeurs de sortie du troisième filtre passe-haut (10) et du premier filtre passe-bas (11) sont comparées entre elles et appliquées, en tant que grandeur de régulation, au premier filtre passe-bas (11).

3. Procédé selon l'une des revendications 1 ou 2, **caractérisé en ce que** le régime moteur intégré, à l'aide du premier filtre passe-bas (11), en fonction du temps est intégré, à l'aide d'un deuxième filtre passe-bas (18), en fonction du temps, dans lequel le deuxième filtre passe-bas (18) est conçu de manière inverse au premier filtre passe-bas (11), et dans lequel la valeur de sortie de l'un des filtres passe-bas (11, 18) est soustraite à la valeur de sortie de l'autre des filtres passe-bas (11, 18), et dans lequel le couple de consigne est régulé en fonction des valeurs de sortie du deuxième filtre passe-haut (8) et de la valeur obtenue par la soustraction.

4. Procédé selon la revendication 3, **caractérisé en ce qu'**une valeur moyenne est calculée à partir de la valeur de sortie du deuxième filtre passe-bas (18), le couple de consigne étant régulé en fonction de la valeur moyenne.

5. Procédé selon la revendication 4, **caractérisé en ce que** la valeur moyenne calculée est amplifiée aux fins de la régulation du couple de consigne.

6. Dispositif (1) de fonctionnement d'une machine électrique (2) d'un véhicule (3), comprenant un dispositif de régulation (4) destiné à réguler un couple de consigne de la machine électrique (2) lors d'un processus de conduite, en fonction d'un régime moteur détecté et dépendant du temps de la machine électrique (2),
dans lequel
le dispositif comprend un premier filtre passe-haut (5) destiné à différencier en fonction du temps le régime moteur détecté, un moyen de limitation (7) destiné à limiter le régime moteur, différencié en fonction du temps, du premier filtre passe-haut (5) à des gradients à pente positive, et un deuxième filtre passe-haut (8) destiné à différencier en fonction du temps les gradients à pente positive, **caractérisé par** un troisième filtre passe-haut (10) destiné à différencier en fonction du temps le régime moteur détecté et un premier filtre passe-bas (11) destiné à intégrer en fonction du temps la valeur de sortie du troisième filtre passe-haut (10), dans lequel le premier filtre passe-bas (11) fonctionne avec une constante de temps inférieure à celle du troisième filtre passe-haut (10),
dans lequel le dispositif de régulation (4) régule le couple de consigne en fonction des valeurs de sortie du deuxième filtre passe-haut (8) et du premier filtre passe-bas (11), le dispositif de régulation (4) ajoutant au couple de consigne un couple d'amortissement résultant des valeurs de sortie du deuxième filtre passe-haut (8) et du premier filtre passe-bas (11).

7. Dispositif selon la revendication 6, **caractérisé par** un deuxième filtre passe-bas (18) destiné à intégrer en fonction du temps la valeur de sortie du premier filtre passe-bas (11), dans lequel le deuxième filtre passe-bas (18) est conçu de manière inverse au premier filtre passe-bas (11), et par un dispositif de calcul (19) destiné à soustraire la valeur de sortie de l'un des filtres passe-bas (11, 18) à la valeur de sortie de l'autre filtre passe-bas (11, 18), dans lequel le dispositif de régulation régule le couple de consigne en fonction des valeurs de sortie du deuxième filtre passe-haut (8) et de la valeur de sortie du dispositif de calcul (19) .

8. Dispositif d'entraînement (24) pour un véhicule (3), comprenant une machine électrique (2) et un dispositif (1) destiné au fonctionnement de la machine électrique (2), **caractérisé en ce que** le dispositif (1) est conçu pour mettre en œuvre le procédé selon l'une des revendications 1 à 5 lorsqu'il est utilisé conformément à sa destination.

9. Véhicule automobile, **caractérisé par** un dispositif d'entraînement (24) selon la revendication 8.
